# EUROPEAN PATENT SPECIFICATION

(11) **EP 3 517 331 B1**
(45) Date of publication and mention of the grant of the patent: **17.02.2021**
(21) Application number: 19151572.5
(22) Date of filing: 14.01.2019
(51) Int. Cl.: B60J 7/06

(54) **ROLLER LID-SHUTTERS**
ROLLBARE LADEFLÄCHENKLAPPE
VOLETS À COUVERCLE À ROULEAU

(43) Date of publication of application: 31.07.2019
(73) Proprietor: Gi.Anso 4x4 Club S.A., 19200 Elefsina-Attikis (GR)
(72) Inventor: Michailidis, Athinodoros, 145 63 POLITEIA (KIFISIA) (GR)
(74) Representative: Gallego Jiménez, José Fernando

(56) References cited:
- WO-A1-90/02056
- FR-A- 751 374
- US-A- 6 126 226
- US-A1- 2016 236 550

## Description

The present disclosure relates to roller lid-shutters for pick-up truck vehicles, particularly used for covering the truck bed rail part.

### BACKGROUND

Truck bed covers are widely used in various types of pick-up truck vehicles for the protection of cargo which is loaded on the truck bed. The surface of the truck bed rail part can be entirely covered by those bed covers.

One example of a bed cover includes a rollable or retractable cover lid which can be rolled up inside a housing box so as to uncover the truck bed and can be rolled out from the housing box so as to cover the truck bed. The term "roller lid shutter" is used herein to denote any mechanism used in truck bed covers to retract and store a cover lid inside a housing box. The housing box comprises a system of retraction and storage of the cover lid. The system of retraction may have a spring or the like which allow rotation of the cover lid about its longitudinal axis.

Housing boxes may usually have drainage systems to discharge rainwaters trapped inside thereof. The rainwaters may be pouring into the housing box through the upper surface of the cover lid. This is happening because of the roller lid shutter's rotation (open-close process) and the truck bed's body slope towards the cabin's side. The drainage system includes drainages pipes which drive the rainwater out of the vehicle's trunk body.

FR751374 discloses a mobile roofing system for cars and other applications. The mobile roofing system of FR751374 has a housing box with a drainage system.

However, most roller lid shutters for pick-up trucks face problems with their spring (metallic, e.g. iron made) which rotates the roller lid shutter after a period of use. Over time, the spring may show signs of corrosion/rust which could lead to poor performance or even damage. However, although such corrosion may be attributed to water, when opening the cover lid, no water may be found but leaves and other small rubbishes on the upper surface thereof. Because of gravity, all these (leaves or rubbishes) may be drifting into the housing box and move to the drainage system.

### SUMMARY

In a first aspect, a roller lid-shutter for a pick-up truck is provided. The roller lid-shutter comprises a housing box and a rollable lid, the rollable lid to be received in a contracted condition in the housing box, the housing box having at least bottom and top walls joined by side walls to form an interior space. The roller lid-shutter further comprises a drainage pipe in fluid communication with the interior space of the housing box through a drainage hole in the bottom wall. The housing box comprises a level sight window on one side wall to indicate a liquid level inside the housing box.

The roller lid-shutter according to this first aspect may give users the possibility of checking the presence of trapped water whenever they want in a convenient, easy and quick way. Thus, if water is observed then the housing box may be opened to remove any residues that may block the drainage pipe. Thus, water is removed before any significant corrosion effect may take place to the spring. Also, there is no need to open the housing box to perform a visual inspection of the interior thereof. Furthermore, thanks to these features the best and for long life operation of the rolled lid-shutter may be ensured.

In another aspect, which does not form part of the claimed invention, a roller lid-shutter for a pick-up truck is provided. The roller lid-shutter comprises a housing box and a rollable lid, the rollable lid to be received in a contracted condition in the housing box, the housing box having at least bottom and top walls joined by side walls to form an interior space. The roller lid-shutter further comprises a drainage pipe in fluid communication with the interior space of the housing box through a drainage hole in the bottom wall. The housing box further comprises a sieve which is arranged at the bottom wall over the drainage hole.

The roller lid-shutter according to this further aspect may provide a protection system for the drainage pipe. The sieve may act as a protective shield able to retain most of the leaves/rubbishes and allow the liquid to escape from the housing box in a shorter period of time. Thus corrosion is avoided as the drainage pipe is not obstructed and water is removed through the drainage pipe before any significant corrosion effect may take place to the spring
Furthermore, thanks to these features the best and for a long life operation of the rolled lid-shutter may be ensured.

According to yet another aspect, a pick-up truck vehicle is provided. The vehicle comprises a roller lid-shutter according to any of the herein disclosed examples.

### BRIEF DESCRIPTION OF THE DRAWINGS

Non-limiting examples of the present disclosure will be described in the following, with reference to the appended drawings, in which:
Figure 1 schematically shows a perspective view of a roller lid-shutter to be installed in a pick-up truck vehicle,
Figure 2 schematically shows the roller lid-shutter of figure 1 with some rubbish,
Figure 3 schematically shows an exploded view of a housing box and a cover lid of a roller lid-shutter according to one example,
Figure 4 schematically shows a partial view of a roller lid-shutter with a housing box according to another example,
Figure 5 schematically shows a partial view of a roller lid-shutter with a housing box according to a further example,
Figure 6 schematically shows a partial view of a roller lid-shutter with a housing box according to yet another example,
Figure 7 schematically shows a partial view of a roller lid-shutter with a housing box according to an alternative example.

### DETAILED DESCRIPTION OF EXAMPLES

In these figures the same reference signs have been used to designate matching elements.

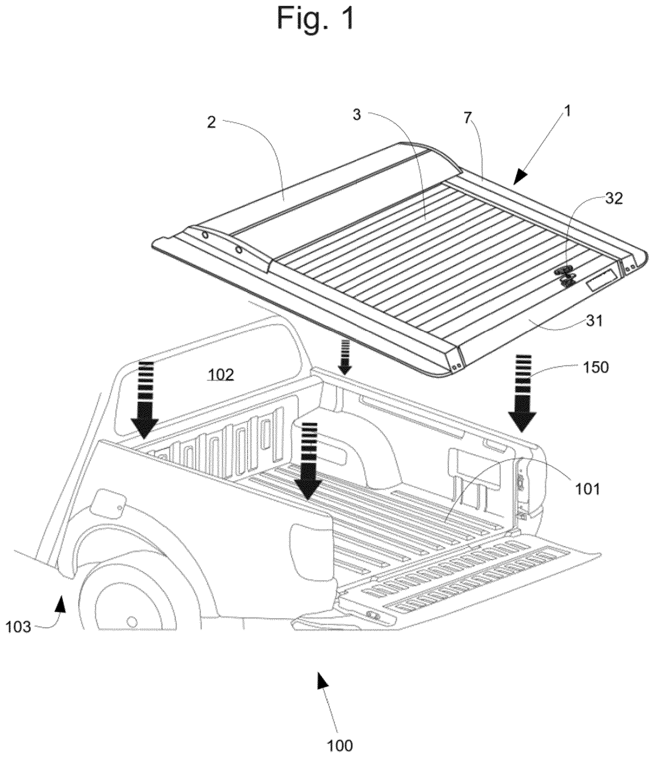

Figure 1 schematically shows a perspective view of a roller lid-shutter 1 to be installed in a pick-up truck vehicle 100. As shown, the roller lid-shutter 1 is to be placed on the truck bed 101 following direction depicted by arrows 150. The roller lid-shutter 1 is shown in an extended condition or position, i.e. the cover lid 3 is rolled out from a housing box 2. Although the cover lid 3 is illustrated fully rolled out it can be envisaged a cover lid 3 in an intermediate position, i.e. partially rolled out from the housing box 2. In the example illustrated the cover lid 3 can be extended or retracted following a path defined by side guides 7 although any other guiding means may be used alternatively. The side guides 7 may have rails in which the cover lid 3 may be trailed to any position alongside the truck bed 101.

The housing box 2 and the side guides 7 may be made from a plastic or metallic material such as aluminum or the like. In both cases, materials may be chosen to be all-weather proof.

The pick-up vehicle 100 of figure 1 comprises a bed 101 and a cabin 102, both supported by a chassis 103. The chassis 103 may be any available in the market e.g a ladder frame. The bed 101 may be tilted relative to the chassis 103 and towards the cabin 102. The type of the pick-up truck vehicle 100 in figure 1 is indicative, because the configuration of the roller lid-shutter 1 allows the adjustment thereof to any size of a truck bed 101 or to any type of pick up vehicles 100 (i.e. double cab, space (club/crew) cab, single cab).

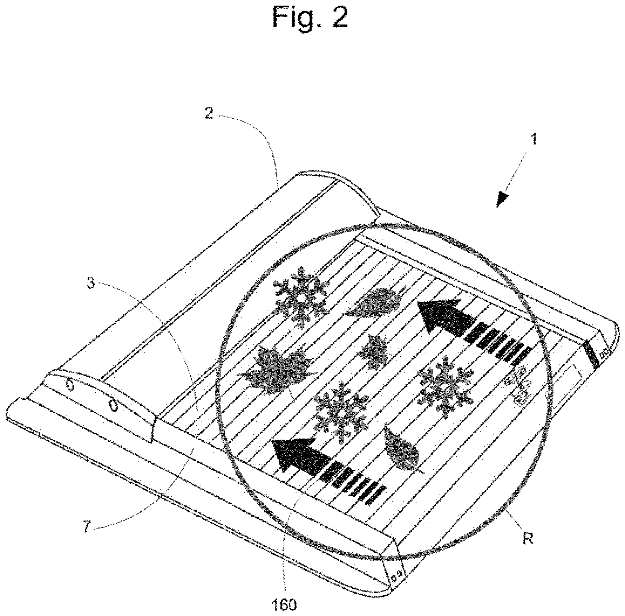

Figure 2 schematically shows the roller lid-shutter 1 of figure 1 with some rubbish R. The cover lid 2 may protect the truck bed 101 against that rubbish R. The rubbish R has been encircled for the sake of clarity and may comprise leaves, branches, dust, sand, mud and so on. Rubbish R may be placed on a surface of the cover lid 3 when extended, i.e. when it has been rolled out from the housing box 2 at least partially. In figure 2 liquids such as rainwater, dew drops (even from frost) have been illustrated along with rubbish R and have been referred to as being rubbish R as well for the sake of simplicity.

When the cover lid 3 is rolled up to a retracted or contracted condition in the housing box 2, it follows direction of arrows 160. Then the rubbish R including water in any state present on the cover lid 3 may enter the housing box 2.

In figures 1 and 2, it can be seen the housing box 2 and the side guides 7 are disposed forming a "Π" (pi) shaped construction. Alongside the side guides 7, there have been created channels (not illustrated), for placing a rubber row, in order to avoid bumping and prevent water entry into the truck bed 101, or for supporting places for the truck bed's accessories such as side handrails, roll bars, loading bards or the like.

In figures 1 and 2, it can also be seen an ending part of the rollable-retractable cover lid 6 which may include a slat 31 that facilitates and makes easier its opening-closing procedure. A locking system 32 may be placed upon this slat it, for locking the cover lid 6 and securing the truck bed.

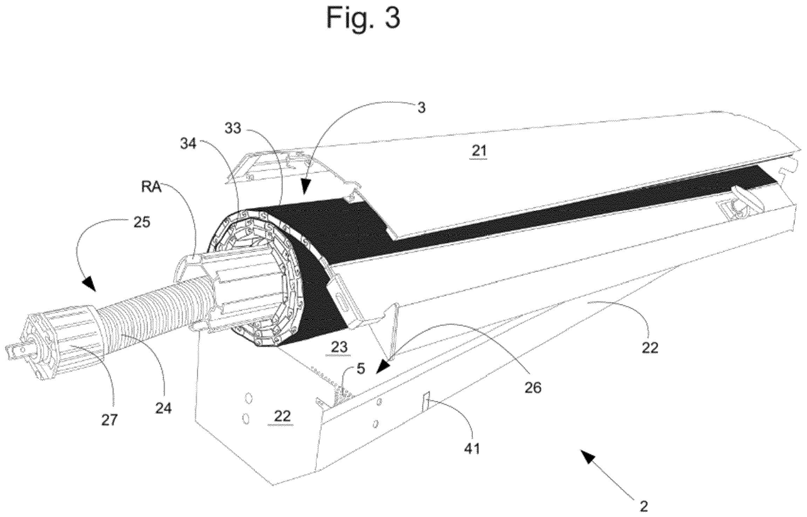

In figure 3, it may be seen that the roller lid-shutter comprises the housing box 2, and the rollable lid 3 is to be received in a contracted condition or position in the housing box 2. The housing box 2 has at least bottom and top walls 21, 23 joined by side walls 22 to form an interior space 26.

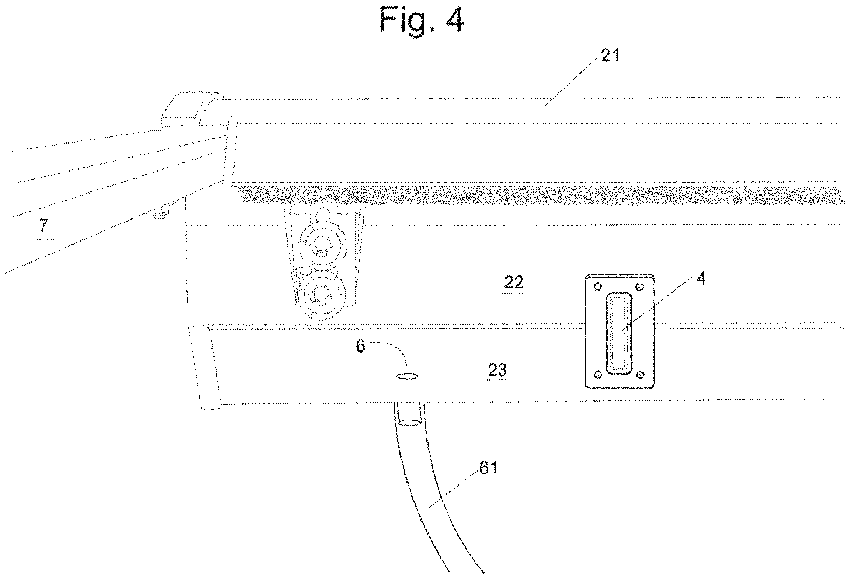

The roller lid-shutter 1 further comprises a drainage pipe 61 in fluid communication with the interior space 26 of the housing box 2 through a drainage hole 6 in the bottom wall 23, see for instance figure 4. The housing box 2 also comprises a level sight window 4 on one side wall 22 to indicate a liquid level inside the housing box 2. In the attached figures, the liquid level and some parts of the housing box have not been illustrated for the sake of clarity.

In the known solutions leaves/rubbishes may reduce or even prevent a liquid, e.g. water, from flowing and trapping it into the housing box at least during a period of time. After a period of use, the trapped water may corrode/rust or extremely destroy the spring (iron made) which rotates the roller lid shutter. As a result the known roller lid shutter does not work properly anymore.

Also in the known solutions, a user must open, basically unscrew, the housing box once in a while to check whether there is a water accumulation in the housing box. However, this operation can be both difficult and even dangerous for the user: rolling mechanism inside the housing box is complex and should be handled by qualified personnel only in order to avoid any risks. Therefore, the housing box is opened during maintenance tasks, which means a long period of time without checking if a water lever is corroding metallic parts.

With the roller lid-shutter illustrated in the attached figures any liquid, such as water, present inside the housing box 2 may flow through the drainage hole 6 thanks to gravity. The user may check the level sight window, either periodically or after a rainfall, to ensure no liquid level is built-up inside the housing box 2. When the user realizes that a quantity of liquid is present inside the housing, the housing box 2 may be opened so as to check the drainage hole 6. If there is rubbish occluding the drainage hole 6, at least partially, it can be removed so as to allow the liquid to flow through the drainage pipe 61. The liquid may be led through the drainage pipe 61 and, for instance, it may be discharged from the vehicle 100 and fall on the road or floor.

In figure 3, part of the system of retraction and storage of the housing box 2 is illustrated. For instance, the system of retraction may comprise a rolling mechanism 25 for the lid 3 in the housing box 2. The rolling mechanism 25 may comprise a spring 24 which may be made from steel and the like, and a rotation axis RA about which the cover lid 3 may be rolled up or out. The rolling mechanism 25 may further comprise a roller winding 27 associated with both the spring 24 and the rotation axis RA. The spring 24 may be located inside and along the hollow rotation axis RA, and the roller winding 27 may be placed/attached at/to one end of the rotation axis RA. Alternatively, there may be a roller winding 27 at each end of the rotation axis RA. In the example of figure 3, the roller winding 27 is attached to one end of the spring 24 such that the spring 24 may be twisted along its longitudinal axis when the cover lid 3 is extended. As spring 24 is twisted, it may store energy by torsion. That energy may be used to roll up the cover lid 3 back to its retracted condition.

The cover lid 3 illustrated in figure 3 comprises a plurality of roller hinged bars 34 connected to each other and placed transversely to the direction of arrows 160 as shown in figure 2. The roller hinged bars 34 may be made from aluminum or any other material and may be coated with a layer 33 made from a material such as polyvinyl or the like. The above mentioned rubbish R may be placed on the layer 33 when the cover lid 3 is, at least partially, extended.

The liquid such as water which may enter the housing box 2 as above mentioned may damage, *inter alia,* spring 24 if the liquid is not removed from the inside of the housing box within a predetermined period of time, the sooner the better.

The housing box 2 of figure 3 comprises a bore 41 or the like which allows a fluid communication between the level sight window 4 (not illustrated) and the interior space 26 of the housing box 2.

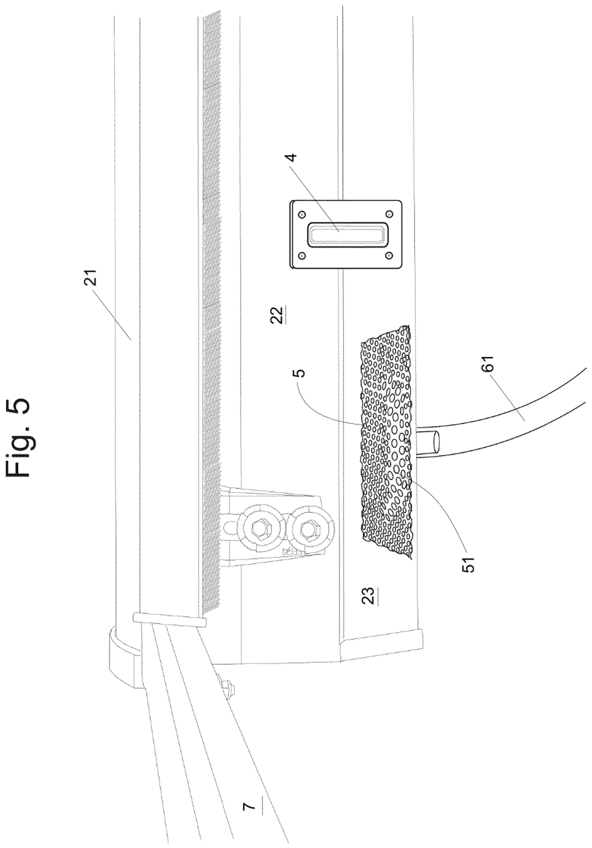

Figure 5 schematically shows a partial view of a roller lid-shutter 1 with a housing box 2 according to a further example. In this example, the housing box 2 of Figure 4 further comprises a sieve 5 which is arranged at the bottom wall 23 over the drainage hole 6 (for instance in an operating condition as a reference), in such a way that a liquid flowing through the drainage hole 6 towards the drainage pipe 61 may be at least partially filtered, i.e. the liquid may be separated from the rubbish at least partially. This way the rubbish R which has entered the housing box 2 may be retained inside thereof and the liquid may be discharged from the housing box 2.

The sieve 5 may comprise a laminar body with a protuberance 51 facing towards the interior space 26 of the housing box 2. The latter can be seen in figure 5 as well, where the protuberance 51 is formed projecting from the rest of the laminar body in a direction opposite to drainage pipe 61. The laminar body 51 may be a mesh, a strainer or the like. The laminar body 51 may be made from a suitable material such as metal, plastic, wood and so on. By way of non-limiting example, the metal may be aluminum or stainless steel.

The protuberance 51 may prevent the rubbish to accumulate on top of the drainage hole 6 and may also lead it away from the drainage hole 6. Thus, a better protection against accumulation of rubbish on the drainage hole 6 may be achieved.

In some examples as those ones illustrated in figure 5, the protuberance 51 may have an, at least partially, rounded cross section. Alternatively, the protuberance 51 may have a frusto-conical cross section. It has been found that the rounded cross section or the slanted portion of the frusto-conical cross section may allow a better guiding of the rubbish away from the drainage hole 6.

The level sight window 4 and the sieve 5 may work together as protective shields for the system of retraction, particularly for those parts made from rustable materials. Rubbish may be prevented from occluding drainage hole 6 and by means of level sigh window 4 the user may be confident that any possible quantities of liquid built-up inside the housing box 3 may be properly detected so as to reduce damage to the rustable materials. This may ensure the best and for long operation of the roller lid-shutter 1.

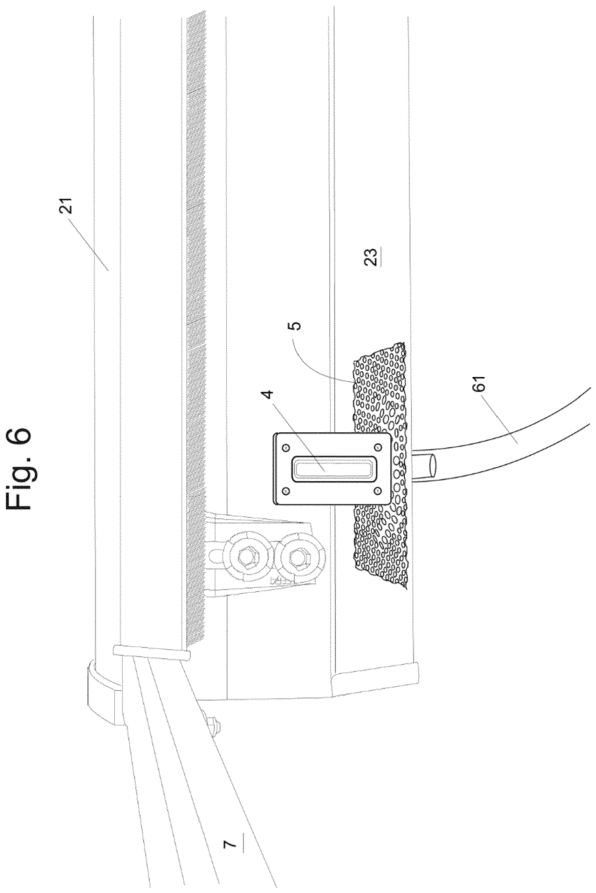

Figure 6 schematically shows a partial view of a roller lid-shutter with a housing box according to yet another example. In this example, the level sight window 4 is positioned aligned with the drainage hole 6. This way, the user may notice easily a trapped liquid on the drainage hole 6.

Although the illustrated examples have one drainage hole 9, the housing box 2 may further comprise various drainage holes 6 with corresponding drainage pipes 61.

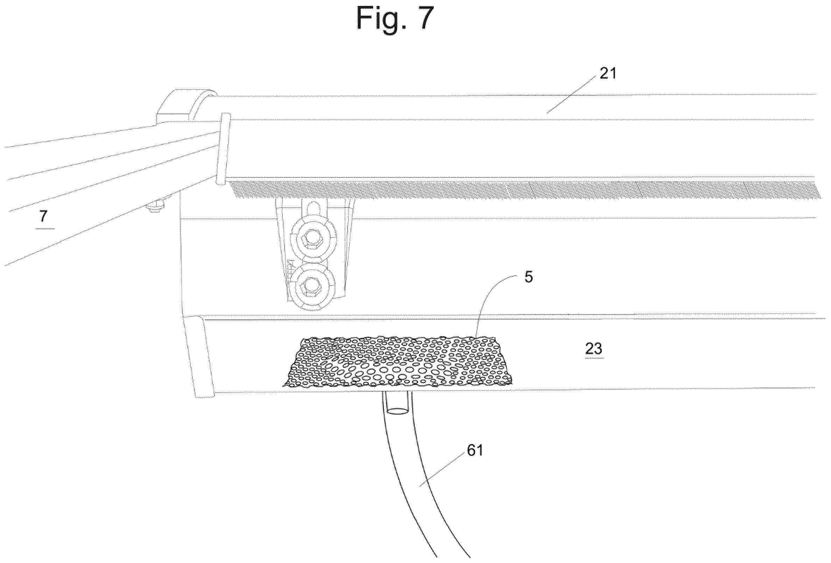

Figure 7 schematically shows a partial view of a roller lid-shutter with a housing box according to an alternative example.

An alternative example of roller lid-shutter 1 can be seen in figure 7. The roller lid-shutter 1 comprises a housing box 2 and a rollable lid 3, the rollable lid 3 to be received in a contracted condition in the housing box 2. The housing box 2 has at least bottom and top walls 21, 23 joined by side walls 22 to form an interior space. The roller lid-shutter 1 further comprises a drainage pipe 61 in fluid communication with an inside of the housing box 2 through a drainage hole 6 in the bottom wall 23. The housing box 2 further comprises a sieve 5 which is arranged at the bottom wall over the drainage hole 6 (for instance in an operating condition as a reference). This way a liquid flowing through the drainage hole 6 towards the pipe 61 is at least partially filtered, and obstruction of the pipe 61 is avoided. Thus, no water may accumulate in the housing box 2 and corrosion of the spring 24 is prevented.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by the claims that follow. If reference signs related to drawings are placed in parentheses in a claim, they are solely for attempting to increase the intelligibility of the claim, and shall not be construed as limiting the scope of the claim.

## Claims

1. A roller lid-shutter (1) for a pick-up truck comprising a housing box (2) and a rollable lid (3), the rollable lid (3) to be received in a contracted condition in the housing box (2), the housing box (2) having at least bottom and top walls (21, 23) joined by side walls (22) to form an interior space (26),
the roller lid-shutter (1) further comprising a drainage pipe (61) in fluid communication with the interior space (26) of the housing box (2) through a drainage hole (6) in the bottom wall (23),
**characterized in that** the housing box (2) comprises a level sight window (4) on one side wall (22) to indicate a liquid level inside the housing box (2).

2. The roller lid-shutter according to claim 1, wherein the housing box (2) further comprises a sieve (5) which is arranged at the bottom wall (23) over the drainage hole (6).

3. The roller lid-shutter according to claim 2, wherein the sieve (5) comprises a laminar body with a protuberance (51) facing towards the inside of the housing box (2).

4. The roller lid-shutter according to claim 3, wherein the protuberance (51) has an at least partially rounded cross section.

5. The roller lid-shutter according to claim 3, wherein the protuberance (51) has a frusto-conical cross section.

6. The roller lid-shutter according to any of claims 1 - 5, wherein the level sight window (4) is positioned aligned with the drainage hole (6).

7. The roller lid-shutter according to any of claims 1 - 6, further comprising various drainage holes with corresponding drainage pipes.

8. The roller lid-shutter according to any of claims 1 - 7, wherein the housing box comprises a rolling mechanism (25) for the lid (3).

9. The roller lid-shutter according to claim 8, where the rolling mechanism (25) is actuated by a spring (24).

10. The roller lid-shutter according to claim 9, wherein at least part of the rolling mechanism (25) and/or the spring (24) is metallic.

11. The roller lid-shutter according to claim 10, wherein the part of the rolling mechanism (25) and/or the spring (24) is made of iron or of an iron alloy.

12. Pick-up truck vehicle (100) comprising a roller lid-shutter (1) according to any of claims 1 - 11.

13. Pick-up truck vehicle according to claim 12, comprising a bed (101) and a cabin (102), both supported by a chassis (103), wherein the bed (101) is tilted relative to the chassis (103) and towards the cabin (102).

## Patentansprüche

1. Rolldeckelverschluss (1) für einen Kleintransporter, umfassend einen Gehäusekasten (2) und einen Rolldeckel (3), wobei der Rolldeckel (3) in einem eingefahrenen Zustand in dem Gehäusekasten (2) aufgenommen ist; wobei der Gehäusekasten (2) mindestens untere und obere Wände (21, 23) aufweist, die durch Seitenwände (22) verbunden sind, um einen Innenraum (26) zu bilden, wobei der Rolldeckelverschluss (1) ferner ein Abflussrohr (61) in Fluidverbindung mit dem Innenraum (26) des Gehäusekastens (2) durch ein Abflussloch (6) in der unteren Wand (23) umfasst,
**dadurch gekennzeichnet, dass** der Gehäusekasten (2) ein ebenes Sichtfenster (4) an einer Seitenwand (22) zur Anzeige eines Flüssigkeitsstands in dem Gehäusekasten (2) umfasst.

2. Rolldeckelverschluss nach Anspruch 1, wobei der Gehäusekasten (2) ferner ein Sieb (5) umfasst, das an der unteren Wand (23) über dem Abflussloch (6) angeordnet ist.

3. Rolldeckelverschluss nach Anspruch 2, wobei das Sieb (5) eine Schichtkörper mit einem Vorsprung (51) umfasst, der in Richtung der Innenseite des Gehäusekastens (2) weist.

4. Rolldeckelverschluss nach Anspruch 3, wobei der Vorsprung (51) einen mindestens teilweise abgerundeten Querschnitt aufweist.

5. Rolldeckelverschluss nach Anspruch 3, wobei der Vorsprung (51) einen kegelstumpfförmigen Querschnitt aufweist.

6. Rolldeckelverschluss nach einem der Ansprüche 1 bis 5, wobei das Füllstandsichtfenster (4) ausgerichtet mit dem Abflussloch (6) positioniert ist.

7. Rolldeckelverschluss nach einem der Ansprüche 1 bis 6, ferner umfassend verschiedene Abflusslöcher mit entsprechenden Abflussrohren.

8. Rolldeckelverschluss nach einem der Ansprüche 1 bis 7, wobei der Gehäusekasten einen Rollmechanismus (25) für den Deckel (3) umfasst.

9. Rolldeckelverschluss nach Anspruch 8, wobei der Rollmechanismus (25) durch eine Feder (24) betätigt wird.

10. Rolldeckelverschluss nach Anspruch 9, wobei mindestens ein Teil des Rollmechanismus (25) und/oder die Feder (24) metallisch sind.

11. Rolldeckelverschluss nach Anspruch 10, wobei der Teil des Rollmechanismus (25) und/oder die Feder (24) aus Eisen oder einer Eisenlegierung hergestellt sind.

12. Kleintransporter (100), umfassend einen Rolldeckelverschluss (1) nach einem der Ansprüche 1 bis 11.

13. Kleintransporter nach Anspruch 12, umfassend ein Bett (101) und ein Kabine (102), die beide von einem Fahrgestell (103) abgestützt werden, wobei das Bett (101) in Bezug auf das Fahrgestell (103) und in Richtung der Kabine (102) geneigt ist.

## Revendications

1. Couvercle-volet roulant (1) pour une camionnette comprenant un caisson de logement (2) et un couvercle enroulable (3), le couvercle enroulable (3) devant être reçu à l'état replié dans le caisson de logement (2), le caisson de logement (2) ayant au moins des parois inférieure et supérieure (21, 23) reliées par des parois latérales (22) pour former un espace intérieur (26),
le couvercle-volet roulant (1) comprenant en outre un tuyau de drainage (61) en communication fluidique avec l'espace intérieur (26) du caisson de logement (2) à travers un trou de drainage (6) dans la paroi inférieure (23),
**caractérisé en ce que** le caisson de logement (2) comprend une fenêtre de visée de niveau (4) sur une paroi latérale (22) pour indiquer un niveau de liquide à l'intérieur du caisson de logement (2).

2. Couvercle-volet roulant selon la revendication 1, dans lequel le caisson de logement (2) comprend en outre un tamis (5) qui est disposé au niveau de la paroi inférieure (23) au-dessus du trou de drainage (6).

3. Couvercle-volet roulant selon la revendication 2, dans lequel le tamis (5) comprend un corps laminaire avec une protubérance (51) tournée vers l'intérieur du caisson de logement (2).

4. Couvercle-volet roulant selon la revendication 3, dans lequel la protubérance (51) a une section transversale au moins partiellement arrondie.

5. Couvercle-volet roulant selon la revendication 3, dans lequel la protubérance (51) a une section transversale tronconique.

6. Couvercle-volet roulant selon l'une quelconque des revendications 1 à 5, dans lequel la fenêtre de visée de niveau (4) est positionnée alignée avec le trou de drainage (6).

7. Couvercle-volet roulant selon l'une quelconque des revendications 1 à 6, comprenant en outre divers trous de drainage avec des tuyaux de drainage correspondants.

8. Couvercle-volet roulant selon l'une quelconque des revendications 1 à 7, dans lequel le caisson de logement comprend un mécanisme de roulement (25) pour le couvercle (3).

9. Couvercle-volet roulant selon la revendication 8, où le mécanisme de roulement (25) est actionné par un ressort (24).

10. Couvercle-volet roulant selon la revendication 9, dans lequel au moins une partie du mécanisme de roulement (25) et/ou du ressort (24) est métallique.

11. Couvercle-volet roulant selon la revendication 10, dans lequel la partie du mécanisme de roulement (25) et/ou du ressort (24) est en fer ou en un alliage de fer.

12. Véhicule camionnette (100) comprenant un couvercle-volet roulant (1) selon l'une quelconque des revendications 1 à 11.

13. Véhicule camionnette selon la revendication 12, comprenant un lit (101) et une cabine (102), tous deux supportés par un châssis (103), dans lequel le lit (101) est incliné par rapport au châssis (103) et vers la cabine (102).
